# EUROPÄISCHE PATENTSCHRIFT

(11) **EP 2 817 758 B1**
(45) Veröffentlichungstag und Bekanntmachung des Hinweises auf die Patenterteilung: **04.04.2018**
(21) Anmeldenummer: 13702803.1
(22) Anmeldetag: 05.02.2013
(51) Int. Cl.: G06F 21/33, G06F 21/34

(54) **COMPUTERIMPLEMENTIERTES BEZAHLVERFAHREN**
COMPUTER-IMPLEMENTED PAYMENT METHOD
PROCÉDÉ DE PAIEMENT INFORMATISÉ

(30) Priorität: 22.02.2012 DE 102012202731
(43) Veröffentlichungstag der Anmeldung: 31.12.2014
(73) Patentinhaber: Bundesdruckerei GmbH, 10969 Berlin (DE)
(72) Erfinder: DIETRICH, Frank, 12437 Berlin (DE); PAESCHKE, Manfred, 16348 Wandlitz (DE)
(74) Vertreter: Richardt Patentanwälte PartG mbB
(86) Internationale Anmeldenummer: PCT/EP2013/052198
(87) Internationale Veröffentlichungsnummer: WO 2013/124145

(56) Entgegenhaltungen:
- EP-A1- 1 349 032
- DE-A1-102009 027 681
- "Architektur elektronischer Personalausweis und elektroni-scher Aufenthaltstitel", , 27. Mai 2011 (2011-05-27), XP055059591, Bonn, Germany Gefunden im Internet: URL:https://www.bsi.bund.de/DE/Publikation en/TechnischeRichtlinien/tr03127/tr-03127. html [gefunden am 2013-04-15]
- BSI: "Technische Richtlinie eID-Server", , 1. April 2010 (2010-04-01), Seiten 1-51, XP055001820, Bonn Gefunden im Internet: URL:https://www.bsi.bund.de/DE/Publikation en/TechnischeRichtlinien/technischerichtli nien_node.html [gefunden am 2011-07-01]

## Beschreibung

Die Erfindung betrifft ein computerimplementiertes Bezahlverfahren, ein Computerprogrammprodukt, ein ID-Provider-Computersystem und ein Datenverarbeitungssystem.

Für den elektronischen Handel, das heißt den sogenannten eCommerce, sind verschiedene Zahlungsverfahren bekannt. Dazu gehören übliche Zahlungsverfahren wie zum Beispiel eine papiergebundenen Überweisung oder die Zahlung per Nachnahme sowie elektronische Zahlungsverfahren, wie zum Beispiel Kreditkartenzahlung, die Zahlung per Online-Banking, Inkasso/Billing-Systeme, Factory-Systeme, elektronische Lastschrift, Prepaidverfahren, Zahlung per Telefonrechnung sowie Handy-Payment-Systeme. Solche Zahlungsverfahren werden zum Teil auch für eGovernment Anwendungen eingesetzt. Aus der DE 10 2009 027681 A1 (BUNDESDRUCKEREI GMBH [DE]) 20. Januar 2011 (2011-01-20) ist ein Verfahren zum Erbringen von Online-Diensten bekannt, das ein ID-Token einsetzt. Der Erfindung liegt demgegenüber die Aufgabe zugrunde, ein verbessertes computerimplementiertes Bezahlverfahren sowie ein entsprechendes Computerprogrammprodukt und ein Computersystem zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Nach Ausführungsformen der Erfindung wird ein computerimplementiertes Bezahlverfahren geschaffen. Für jeden registrierten Benutzer wird eine Bezahlinformation in einem elektronischen Speicher gespeichert, wobei auf diese Bezahlinformation mithilfe einer Nutzerkennung durch ein ID-Provider-Computersystem zugegriffen werden kann. Die Nutzerkennung ist als ein Attribut des Nutzers in dem ID-Token des Nutzers zumindest temporär gespeichert oder kann durch den ID-Server-Computer aus einem oder mehreren der Attribute des Nutzers, welche in dem ID-Token gespeichert sind, abgeleitet werden.

Unter einer "Bezahlinformation" wird hier eine Spezifizierung des von dem Nutzer gewünschten Zahlungsverfahrens verstanden, wobei es sich um jedes vorbekannte Zahlungsverfahren handeln kann, insbesondere um ein elektronisches Zahlungsverfahren. Beispielsweise beinhaltet die Bezahlinformation die Angabe einer Kontoverbindung für die Durchführung einer Online-Überweisung, Kreditkartendaten, eine Telefonnummer des Nutzers zur Belastung eines Bezahlbetrags über die Telefonrechnung oder eine Mobiltelefonnummer zur Belastung des Bezahlbetrags mithilfe eines Handy-Payment-Systems.

Insbesondere kann die Bezahlinformation auch spezifizieren, dass der Nutzer die Verwendung eines Prepaid-Zahlungsverfahrens wünscht, wobei in diesem Fall das Prepaid-Konto des Nutzers von dem ID-Provider-Computersystem geführt werden kann.

Unter einem "ID-Token" wird hier insbesondere ein tragbares elektronisches Gerät verstanden, welches zumindest einen Datenspeicher zur Speicherung des zumindest einen Attributs und eine Kommunikations-Schnittstelle zum Auslesen des Attributs aufweist. Vorzugsweise hat der ID-Token einen gesicherten Speicherbereich zur Speicherung des zumindest einen Attributs, um zu verhindern, dass das in dem Speicherbereich gespeicherte Attribut in unerlaubter Weise verändert oder ohne die dafür erforderliche Berechtigung ausgelesen wird.

Insbesondere kann es sich bei dem ID-Token um einen USB-Stick handeln oder ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Bei dem ID-Token kann es sich um einen Hardwaretoken handeln oder um einen Softtoken, wenn dieser kryptografisch an einen Hardwaretoken, das heißt beispielsweise an ein sogenanntes Secure Element, gebunden ist.

Insbesondere kann ein solcher kryptografisch an ein Secure Element gebundener Softtoken gemäß DE 10 2011 082 101, erzeugt werden.

Nach Ausführungsformen der Erfindung ruft der Nutzer, der sich im Besitz seines ID-Tokens befindet, mithilfe eines Internetbrowsers seines Nutzer-Computersystems eine Internetseite eines Dienst-Computersystems auf, wobei die Internetseite zur Eingabe einer Auswahl eines Dienstes ausgebildet ist.

Hierbei wird eine Kommunikationssitzung, das heißt eine Session, zwischen dem Internetbrowser und dem Nutzer-Computersystem aufgebaut, für welche durch das Dienst-Computersystem, das hier die Rolle des Servers einnimmt, eine Session-ID vergeben wird.

Unter einem "Dienst" wird hier jedes kostenpflichtige Angebot des Dienst-Computersystems verstanden, wie zum Beispiel eine online erbrachte Dienstleistung, ein online geliefertes elektronisches Produkt oder eine Ware, die dem Nutzer zum Beispiel per Post oder Kurierdienst geliefert werden kann. Insbesondere kann es sich bei dem Dienst um die Lieferung von Daten, wie zum Beispiel einer Datei, oder einen Streaming-Dienstleistung zur Lieferung von digitalen Inhalten handeln. Das Dienst-Computersystem kann eine virtuellen Einkaufswagen aufweisen, den der Nutzer durch mehrere Auswahlen füllen kann, für die dann der Bezahlvorgang durchgeführt wird. Insbesondere kann es sich bei dem Dienst-Computersystem um einen Onlineshop handeln.

Durch das Dienst-Computersystem kann aber auch eine sogenannte eGovernment-Anwendung implementiert werden, welche kosten- oder gebührenpflichtig ist. Beispielsweise kann es sich um einen Dienst einer Behörde handeln, für welchen Gebühren zu entrichten sind.

Durch das Dienst-Computersystem wird eine Zuordnung der von dem Nutzer eingegebenen Auswahl eines oder mehrerer der Dienste und der Session-ID gespeichert. Das Dienst-Computersystem erzeugt dann eine Anforderung, wobei die Anforderung zumindest einen Bezahlbetrag für die Bezahlung des oder der ausgewählten Dienste, einen Zahlungsempfänger-Identifikator zur Identifizierung des Zahlungsempfängers und die Session-ID beinhaltet. Die Aufforderung wird von dem Dienst-Computersystem signiert und dann über das Netzwerk an das Nutzer-Computersystem übertragen, vorzugsweise über die anhängige Session.

Bei dem Zahlungsempfänger-Identifikator kann es sich beispielsweise um die Angabe einer Kontoverbindung des Zahlungsempfängers handeln oder einen anderen Identifikator, um eines der Zahlungsverfahren zugunsten des Zahlungsempfängers durchführen zu können.

Nach einer Ausführungsform der Erfindung wird die Anforderung von dem Internetbrowser des Nutzer-Computersystems angezeigt, um den Nutzer zumindest über den verlangten Bezahlbetrag in Kenntnis zu setzen. Der Nutzer hat dann die Möglichkeit, die Anforderung abzulehnen oder zu bestätigen. Bei einer Ablehnung wird der Vorgang an dieser Stelle abgebrochen.

Nach Eingabe einer Bestätigung des Nutzers in das Nutzer-Computersystem wird hingegen die Anforderung an das ID-Provider-Computersystem weitergeleitet. Das ID-Provider-Computersystem führt daraufhin einen Lesezugriff auf den ID-Token des Nutzers durch, wobei eine Voraussetzung hierfür ist, dass sich zuvor der Nutzer und das ID-Provider-Computersystem gegenüber dem ID-Token authentifiziert haben.

Das zumindest eine Attribut wird dann von dem ID-Token zu dem ID-Provider-Computersystem übertragen, und zwar mit Ende-zu-Ende-Verschlüsselung.

Das ID-Provider-Computersystem greift dann mit Hilfe des zumindest einen Attributs durch welches die Nutzerkennung gegeben ist, auf die Bezahlinformation des Nutzers zu und initiiert einen entsprechenden Bezahlvorgang. Das ID-Provider-Computersystem erzeugt ferner eine Antwort auf die Anforderung des Dienst-Computersystems, die eine Bestätigung der Initiierung oder Durchführung des Bezahlvorgangs und die Session-ID beinhaltet. Die Antwort wird von dem ID-Provider-Computersystem signiert und über das Netzwerk an das Dienst-Computersystem übertragen. Das Dienst-Computersystem ordnet mithilfe der Session-ID die Antwort des ID-Provider-Computersystems der von dem Nutzer zuvor getroffenen Auswahl des oder der Dienste zu.

Unter einem "ID-Provider-Computersystem" wird hier ein Computersystem verstanden, welches dazu ausgebildet ist, zumindest ein Attribut aus dem ID-Token eines Nutzers auszulesen. Vorzugsweise wird das ID-Provider-Computersystem in einem sogenannten Trustcenter betrieben, um ein möglichst hohes Maß an Sicherheit zu schaffen.

Unter einem "Dienst-Computersystem" wird hier ein Computersystem verstanden, welches über eine Netzwerk-Schnittstelle zur Verbindung mit dem Netzwerk verfügt, sodass mithilfe eines Internetbrowsers auf von dem Dienst-Computersystem gespeicherte oder generierte Internetseiten zugegriffen werden kann. Insbesondere kann es sich bei dem Dienst-Computersystem um einen Internetserver zur Verfügungstellung einer eCommerce- oder eGovernment-Anwendung handeln, insbesondere einen Onlineshop oder einen Behördenserver.

Unter einem "Nutzer-Computersystem" wird hier ein Computersystem verstanden, auf welches der Nutzer Zugriff hat. Hierbei kann es sich zum Beispiel um einen Personal Computer (PC), ein Tablet PC oder ein Mobilfunkgerät, insbesondere ein Smartphone, mit einem üblichen Internetbrowser, wie zum Beispiel Microsoft Internet Explorer, Safari, Google Chrome, Firefox handeln. Das Nutzer-Computersystem hat eine Schnittstelle zur Verbindung mit dem Netzwerk, wobei es sich bei dem Netzwerk um ein privates oder öffentliches Netzwerk handeln kann, insbesondere das Internet.

Ausführungsformen der Erfindung sind besonders vorteilhaft, da ein universell für eCommerce- und eGovernment-Anwendungen geeignetes computerimplementiertes Bezahlverfahren geschaffen wird, welches gleichzeitig flexibel, bequem in der Handhabung und sicher ist. Dies wird insbesondere dadurch ermöglicht, dass das Bezahlverfahren auf einem ID-Token basiert, wobei Voraussetzung für die Durchführung eines Bezahlvorgangs sowohl die Authentifizierung des Nutzers gegenüber dem ID-Token als auch die Authentifizierung des ID-Provider-Computersystems gegenüber dem ID-Token ist.

Aufgrund der Übertragung des zumindest einen Attributs von dem ID-Token zu dem ID-Provider-Computersystem mit Hilfe von Ende-zu-Ende-Verschlüsselung ist eine sichere Übertragung über das Netzwerk, wie zum Beispiel das Internet, sichergestellt. Insbesondere dann, wenn das ID-Provider-Computersystem als Trustcenter betrieben wird, ist hierdurch ein absolut sicherer "Vertrauensanker" geschaffen.

Nach Ausführungsformen der Erfindung erzeugt das Dienst-Computersystem nach Erhalt der Antwort von dem ID-Provider-Computersystem mit der Bestätigung des Bezahlvorgangs seinerseits eine Bestätigung für den Nutzer. Diese Bestätigung kann von dem Dienst-Computersystem im Rahmen der noch anhängigen Session an den Internetbrowser des Nutzer-Computersystems gesendet werden. Um ein Timeout des Internetbrowsers zu verhindern, kann das Dienst-Computersystem ein oder mehrfach ein Session-keep-alive-Signal senden, wie zum Beispiel den HTTP-Status-Code 102.

Nach einer Ausführungsform der Erfindung handelt es sich bei der Anforderung des Dienst-Computersystems um einen SAML-Request und bei der Antwort des ID-Provider-Computersystems hierauf um eine SAML-Response (vgl. Security Assertion Markup Language (SAML) V2.0 Technical Overview, OASIS, Committee Draft 02, 25. März 2008).

Nach einer Ausführungsform der Erfindung erfolgt die Weiterleitung der Anforderung des Dienst-Computersystems von dem Nutzer-Computersystem an das ID-Provider-Computersystem durch ein sogenanntes Browser-Plugin. Beispielsweise kann das Browser-Plugin eine Eingabeaufforderung zur Anzeige durch den Internetbrowsers generieren, um dem Nutzer zur Bestätigung für ein sogenanntes Redirect aufzufordern. Aufgrund der Eingabe dieser Bestätigung durch den Benutzer wird dann das Redirect durchgeführt, das heißt die Anforderung von dem Nutzer-Computersystem an das ID-Provider-Computersystem weitergeleitet. Eine Implementierung ohne Browser-Plugin ist ebenfalls möglich, insbesondere eine Implementierung basierend auf einem URL-Schema, vergleiche hierzu DE 10 2011 084 728.6.

Nach einer Ausführungsform der Erfindung hat das ID-Provider-Computersystem ein Zertifikat, in dem die Leserechte für die Durchführung des Lesezugriffs spezifiziert sind. Unter einem "Zertifikat" wird hier ein kryptografisches Zertifikat einer Public Key Infrastructure (PKI) verstanden, beispielsweise nach dem X.509-Standard. Bei dem Zertifikat kann es sich beispielsweise um ein Berechtigungszertifikat des Dienst-Computersystems handeln.

In dem Zertifikat kann spezifiziert sein, für welches Attribut oder welche Attribute des Nutzers, die in dem geschützten Speicherbereich des ID-Tokens gespeichert sind, das ID-Provider-Computersystem zur Durchführung des Lesezugriffs berechtigt ist. Bei diesen Attributen kann es sich um persönliche Attribute des Nutzers handeln, wie zum Beispiel seinen Namen, Wohnort und sein Alter. Diese Attribute können in ihrer Kombination als Nutzererkennung verwendet werden, um auf die Bezahlinformation des registrierten Nutzers zuzugreifen. Alternativ oder zusätzlich kann auch ein Pseudonym des Nutzers, welches zumindest temporär von dem ID-Token gespeichert wird, als Nutzerkennung verwendet werden.

Beispielsweise leitet der ID-Token ein solches Pseudonym aus dem öffentlichen Schlüssel des Zertifikats des ID-Provider-Computersystems und einem in dem ID-Token gespeicherten privaten Schlüssel ab. Wenn es sich bei dem ID-Token beispielsweise um den elektronischen Personalausweis der Bundesrepublik Deutschland (ePass) handelt, kann dessen Pseudonymfunktion hierzu verwendet werden, die auch als "Restricted Identifier" (RID) bezeichnet wird.

Unter einem "ID-Token-Pseudonym" wird hier ein Attribut verstanden, nämlich ein Pseudonym, welches einem ID-Token und dessen Nutzer zugeordnet ist, und welches in dem ID-Token zumindest temporär gespeichert wird, um ein Auslesen aus dem ID-Token durch ein hierzu autorisiertes Terminal, insbesondere ein ID-Provider-Computersystem, zu ermöglichen. Insbesondere kann es sich bei dem ID-Token-Pseudonym um den Restricted Identifier des ePass handeln.

Ausführungsformen der Erfindung sind besonders vorteilhaft, da der Nutzer seine Identität gegenüber dem Dienst-Computersystem nicht offenlegen braucht, sondern anonym bleiben kann. Dies ist ein wichtiger Vorteil im Hinblick auf die informationelle Selbstbestimmung des Nutzers und die Datensparsamkeit im Internet.

Nach einer Ausführungsform der Erfindung hat das ID-Provider-Computersystem ein Zertifikat, welches das ID-Provider-Computersystem zu seiner Authentifizierung gegenüber dem ID-Token verwendet, beispielsweise im Rahmen eines Challenge-Response-Protokolls.

Nach einer Ausführungsform der Erfindung werden zur Registrierung des Nutzers die folgenden Schritte durchgeführt: Aufruf einer Internetseite des ID-Provider-Computersystems von dem Nutzer-Computersystem des Nutzers, Eingabe einer Registrierungs-Anforderung in die Internetseite durch den Nutzer, Eingabe der Bezahlinformation des Nutzers, Durchführung eines Lesezugriffs auf den ID-Token des Nutzers von dem ID-Provider-Computersystem über das Netzwerk und über das Nutzer-Computersystem, um zumindest ein in dem ID-Token gespeichertes Attribut aus dem ID-Token zur Ermittlung der Nutzerkennung auszulesen, nachdem sich der Nutzer und das ID-Provider-Computersystem gegenüber dem ID-Token authentifiziert haben, Übertragung des zumindest einen Attributs von dem ID-Token zu dem ID-Provider-Computersystem über das Netzwerk und über das Nutzer-Computersystem mit Ende-zu-Ende-Verschlüsselung, Speicherung der Bezahlinformation in dem elektronischen Speicher mit der Nutzerkennung als Zugriffsschlüssel.

Dies hat den besonderen Vorteil, dass schon für die Registrierung des Nutzers der durch die Kombination des ID-Tokens und des ID-Provider-Computersystems geschaffene "Vertrauensanker" genutzt werden kann, um bei der Registrierung Missbrauch und Manipulationsversuche auszuschließen.

In einem weiteren Aspekt betrifft die Erfindung ein ID-Provider-Computersystem sowie ein Datenverarbeitungssystem mit zumindest einem ID-Token und/oder zumindest einem Dienst-Computersystem.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Datenverarbeitungssystems,
- Figur 2: ein UML-Diagramm einer Ausführungsform eines erfindungsgemäßen Verfahrens.

Elemente der nachfolgenden Ausführungsformen, die einander entsprechen oder gleichen, werden jeweils mit denselben Bezugszeichen gekennzeichnet.

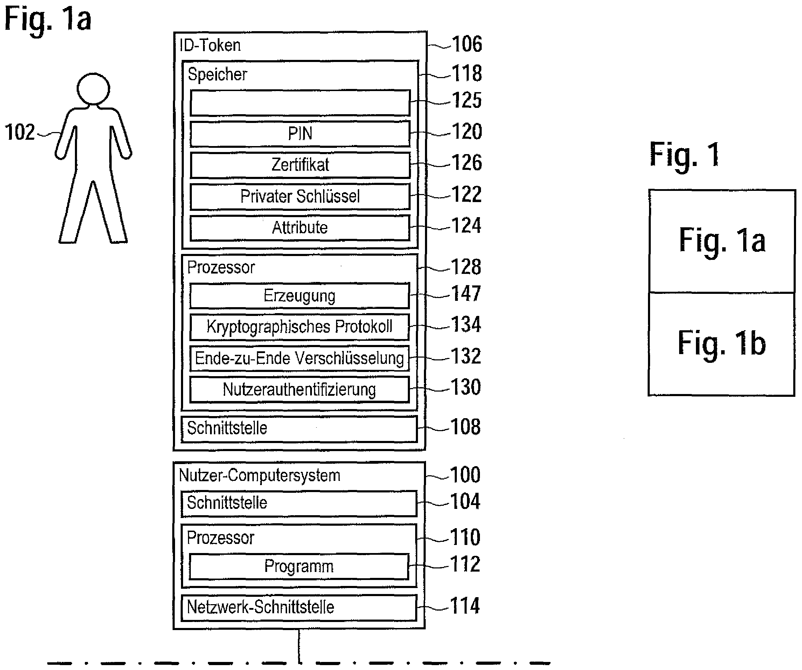

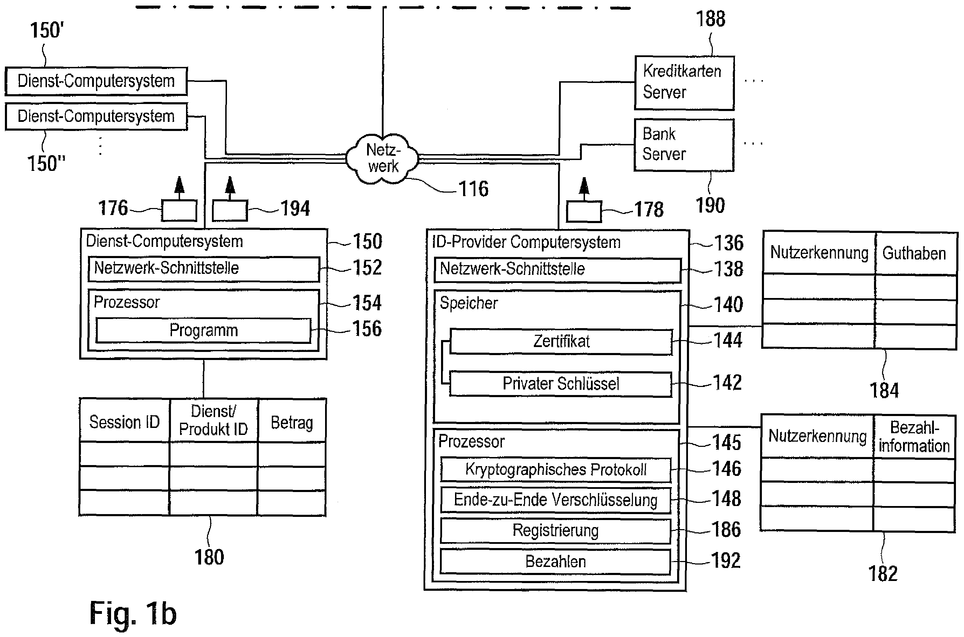

Die Figur 1 zeigt ein Nutzer-Computersystem 100 eines Nutzers 102. Bei dem Nutzer-Computersystem 100 kann es sich um einen Personalcomputer, einen tragbaren Computer, wie zum Beispiel einen Laptop oder Palmtop-Computer, einen Personal Digital Assistant, ein mobiles Telekommunikationsgerät, insbesondere ein Smartphone oder dergleichen handeln. Das Nutzer-Computersystem 100 hat eine Schnittstelle 104 zur Kommunikation mit einem ID-Token 106, der eine entsprechende Schnittstelle 108 aufweist.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Computernetzwerk, wie zum Beispiel das Internet, handeln.

Der ID-Token 106 hat einen elektronischen Speicher 118 mit geschützten Speicherbereichen 120, 122, 124 und 125.

Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine sogenannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der geschützte Speicherbereich 125 dient zur Speicherung eines ID-Token-Pseudonyms nachdem dieses durch Ausführung von Programminstruktionen 147 erzeugt worden ist. Die Speicherung des ID-Token-Pseudonyms in dem geschützten Speicherbereich 125 erfolgt dabei vorzugsweise nur temporär. Beispielsweise wird das ID-Token-Pseudonym aufgrund eines externen Lesezugriffs automatisch aus dem geschützten Speicherbereich 125 gelöscht.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132, 134 und 147. Die Programminstruktionen 130 dienen zur Nutzerauthentifizierung, d. h. zur Authentifizierung des Nutzers 102 gegenüber dem ID-Token.

Bei einer Ausführungsform mit PIN gibt der Nutzer 102 seine PIN zu seiner Authentifizierung in den ID-Token 106 ein, beispielsweise über das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptografischen Protokolls zur Authentifizierung eines ID-Provider-Computersystems 136 gegenüber dem ID-Token 106. Bei dem kryptografischen Protokoll kann es sich um ein Challenge-Response-Protokoll basierend auf einem symmetrischen Schlüssel oder einem asymmetrischen Schlüsselpaar handeln.

Beispielsweise wird durch das kryptografische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptografischen Protokolls authentifiziert sich das ID-Provider-Computersystem 136 gegenüber dem ID-Token und weist seine Leseberechtigung zum Lesen der in dem geschützten Speicherbereich 124 gespeicherten Attribute bzw. des in dem geschützten Speicherbereich 125 gespeicherten ID-Token-Pseudonyms nach. Die Authentifizierung kann auch gegenseitig sein, d. h. auch der ID-Token 106 muss sich dann gegenüber dem ID-Provider-Computersystem 136 nach demselben oder einem anderen kryptografischen Protokoll authentifizieren.

Die Programminstruktionen 132 dienen zur Ende-zu-Ende-Verschlüsselung von zwischen dem ID-Token 106 und dem ID-Provider-Computersystem 136 übertragenen Daten, zumindest aber der von dem ID-Provider-Computersystem 136 aus dem geschützten Speicherbereich 124 und/oder 125 ausgelesenen Daten. Für die Ende-zu-Ende-Verschlüsselung kann ein symmetrischer Schlüssel verwendet werden, der beispielsweise anlässlich der Ausführung des kryptografischen Protokolls zwischen dem ID-Token 106 und dem ID-Provider-Computersystem 136 vereinbart wird.

Alternativ zu der in der Figur 1 dargestellten Ausführungsform kann das Nutzer-Computersystem 100 mit seiner Schnittstelle 104 nicht unmittelbar mit der Schnittstelle 108 kommunizieren, sondern über ein an die Schnittstelle 104 angeschlossenes Lesegerät für den ID-Token 106. Über dieses Lesegerät, wie zum Beispiel einen sogenannten Klasse 2-Chipkarten-Terminal, kann auch die Eingabe der PIN erfolgen.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert ist. Auch bei diesem Zertifikat kann es sich beispielsweise um ein Zertifikat nach einem PKI-Standard, wie zum Beispiel X.509 handeln. Das Zertifikat 144 beinhaltet einen öffentlichen Schlüssel, der zusammen mit dem privater Schlüssel 142 ein asymmetrisches kryptografisches Schlüsselpaar bildet, welches die Identität des ID-Provider-Computersystems 136 definiert.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptografischen Protokolls ausgeführt. Insgesamt wird also das kryptografische Protokoll durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptografischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Ein Dienst-Computersystem 150 kann zur Erbringung einer Online-Dienstleistung, ausgebildet sein. Das Dienst-Computersystem 150 kann beispielsweise als Onlineshop ausgebildet sein. Ferner kann das Dienst-Computersystem 150 auch zur Lieferung von digitalen Inhalten ausgebildet sein, beispielsweise für den Download von Musik- und/oder Videodaten.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert.

Durch die Programminstruktionen 112 wird auf dem Nutzer-Computersystem 100 ein Internetbrowser zur Verfügung gestellt. Mit Hilfe des Internetbrowsers kann der Nutzer 102 eine durch das Dienst-Computersystem 150 generierte Internetseite aufrufen, und zwar über das Netzwerk 116. Neben dem Dienst-Computersystem 150 können weitere Dienst-Computersysteme 150', 150" an das Netzwerk 116 angeschlossen sein, von denen der Nutzer in analoger Art und Weise jeweils auch eine Internetseite aufrufen kann.

In dem Zertifikat 144 des ID-Provider-Computersystems 136 ist eine Leseberechtigung des ID-Provider-Computersystems 136 für einen Lesezugriff auf den ID-Token 106 spezifiziert, und zwar zum Lesen von zumindest einem der Attribute, insbesondere des ID-Token-Pseudonyms, aus einem der geschützten Speicherbereiche des ID-Tokens 106. Dieses Zertifikat 144 dient also zum Nachweis der Leseberechtigung für das ID-Provider-Computersystem 136, und zwar unabhängig davon, für welches der Dienst-Computersysteme 150, 150', 150", ... der Lesezugriff zum Lesen des ID-Token-Pseudonyms durchgeführt werden soll.

Das Dienst-Computersystem 150 hat einen elektronischen Speicher, wie zum Beispiel eine Datenbank 180. Nachdem der Nutzer 102 mit dem Internetbrowser seines Nutzer-Computersystems 100 eine Internetseite des Dienst-Computersystems 150 aufgerufen hat, wird durch Ausführung der Programminstruktionen 156 eine Session-ID für die zwischen dem Internetbrowser und dem Dienst-Computersystem 150 aufgebaute Session vergeben. Der Nutzer 102 kann in die Internetseite eine Auswahl eines Dienstes eingeben, zum Beispiel eines bestimmten Online-Dienstes, den der Nutzer in Anspruch nehmen möchte, oder der Lieferung einer bestimmten Ware, die der Nutzer kaufen möchte.

Unter einem "Dienst" wird hier z.B. eine Online-Dienstleistung, wie zum Beispiel die Übertragung einer Datei oder eines Programms, oder eine Streaming-Dienstleistung, wie zum Beispiel ein Videostreaming, verstanden, sowie auch der Kauf einer Ware, oder eine andere kommerzielle oder behördliche Dienstleistung.

Beispielsweise füllt der Nutzer durch Navigation auf den Internetseiten des Dienst-Computersystems 150 einen virtuellen Warenkorb. Zur Beendigung seines Einkaufs klickt der Nutzer auf der Internetseite zum Beispiel auf "Bezahlen" oder "zur Kasse gehen" oder mit "one click buy" kaufen.

Das Dienst-Computersystem 150 speichert daraufhin die von dem Nutzer in die Internetseite eingegebene Auswahl von einen oder mehreren der Dienste mit der Session-ID als Zugriffsschlüssel in der Datenbank 180. Beispielsweise hat jeder Dienst bzw. jedes Produkt, welches auf der Internetseite angeboten wird, eine Dienst- bzw. Produkt-ID, wie zum Beispiel eine Artikelnummer. Beispielsweise werden also die Artikelnummern der Waren, die der Nutzer kaufen möchte, in der Datenbank 180 gespeichert sowie auch der entsprechende Bezahlbetrag, den der Nutzer für den Kauf dieser Artikel bezahlen muss.

Das ID-Provider-Computersystem 136 hat eine Datenbank 182, in der die Registrierdaten der registrierten Nutzer gespeichert sind. Für jeden registrierten Nutzer ist eine Bezahlinformation in der Datenbank gespeichert, auf welche mit Hilfe der Nutzerkennung des betreffenden Nutzers als Zugriffsschlüssel zugegriffen werden kann. Bei der Nutzerkennung kann es sich zum Beispiel um den Namen, die Anschrift und/oder das Geburtsdatum des Nutzers handeln oder eine daraus abgeleitete Nutzerkennung. Bei der Nutzerkennung kann es sich auch um ein Pseudonym des Nutzers handeln, wie zum Beispiel die RID des Nutzers, welche sich aus dem öffentlichen Schlüssel des Zertifikats 144 und dem privaten Schlüssel des ID-Tokens 106 durch Ableitung mit Hilfe der Programminstruktionen 147 ergibt.

Das ID-Provider-Computersystem 136 kann ferner eine Datenbank 184 haben, um Prepaidkonten für die Nutzer zu führen. Hierzu ist für diejenigen Nutzer, die Prepaid als Bezahlverfahren nutzen möchten, ein Guthaben gespeichert, wobei auf das Guthaben mit Hilfe der Nutzerkennung als Zugriffsschlüssel durch das ID-Provider-Computersystem 136 zugegriffen werden kann. Zur Registrierung der Nutzer dienen Programminstruktionen 186, welche zur Ausführung durch den Prozessor 145 vorgesehen sind.

Das ID-Provider-Computersystem 136 kann über das Netzwerk 116 mit verschiedenen Server-Computern verbunden sein, um verschiedene Zahlungsverfahren, je nach der Bezahlinformation eines Nutzers, durchzuführen. Beispielsweise ist das ID-Provider-Computersystem 136 über das Netzwerk 116 mit einem Kreditkartenserver 188 verbunden, um die Kreditkarte eines Nutzers für die Durchführung des Bezahlvorgangs zu belasten, wenn in der Bezahlinformation des betreffenden Nutzers der Datenbank 182 dessen Kreditkartendaten hinterlegt sind. Ferner ist das ID-Provider-Computersystem 136 mit einem Bankserver 190 über das Netzwerk 116 verbunden, um den Bezahlvorgang mittels Online-Banking für einen Nutzer durchzuführen, wenn für diesen Nutzer in der Datenbank 182 als Bezahlinformation die Zugangsdaten für das Online-Banking hinterlegt sind.

Im Betrieb wird beispielsweise wie folgt vorgegangen:
Mit Hilfe des Internetbrowsers des Nutzer-Computersystems 100 ruft der Nutzer 102 eine Internetseite eines der Dienst-Computersysteme, wie zum Beispiel des Dienst-Computersystems 150, auf. Hierdurch wird eine Session zwischen dem Internetbrowser und dem Dienst-Computersystem 150 gestartet und durch das Dienst-Computersystem 150 wird eine Session-ID vergeben. Der Nutzer gibt dann die Auswahl zumindest eines Dienstes auf der Internetseite über den Internetbrowser ein, woraufhin die entsprechende Dienst-ID bzw. Produkt-ID, insbesondere Artikelnummer, mit dem dazugehörigen Bezahlbetrag und der Session-ID als Zugriffsschlüssel in der Datenbank 180 gespeichert werden.

Das Dienst-Computersystem 150 erzeugt dann eine Anforderung 176, die es über das Netzwerk 116 innerhalb der Session an den Internetbrowser des Nutzer-Computersystems sendet. Die Anforderung 176 beinhaltet den zuvor in der Datenbank 180 gespeicherten Bezahlbetrag, einen Zahlungsempfänger-Identifikator zur Identifizierung des Zahlungsempfängers und die Session-ID. Die Anforderung 176 kann ferner eine Kennung des Dienst-Computersystems 150 beinhalten, beispielsweise eine URL, um den Absender der Anforderung 176 anzugeben. Die Anforderung 176 wird von dem Dienst-Computersystem 150 signiert.

Nach einer Ausführungsform der Erfindung beinhaltet das Zertifikat des Dienst-Computersystems 150, welches dieses für die Signierung der Anforderung 176 benutzt, den Zahlungsempfänger-Identifikator und/oder die Kennung des Dienst-Computersystems 150, wobei der Zahlungsempfänger-Identifikator und die Kennung identisch sein können.

Das Dienst-Computersystem 150 kann einen privaten Schlüssel speichern, der zu einem asymmetrischen kryptografischen Schlüsselpaar gehört, welcher das Dienst-Computersystem 150 identifiziert, und für welchen das Zertifikat des Dienst-Computersystem 150 ausgestellt ist. Bei dem Zertifikat kann es sich um ein sog. Berechtigungszertifikat des Dienst-Computersystems 150 handeln. Für die weitere Dienst-Computersysteme 150', 150" kann es sich analog verhalten.

Die Anforderung 176 wird von dem Internetbrowser des Nutzer-Computersystems 100 angezeigt. Der Nutzer 102 erhält hierdurch Kenntnis, welcher Bezahlbetrag an welchen Zahlungsempfänger bezahlt werden soll. Der Nutzer 102 kann dann eine Bestätigung in den Internetbrowser eingeben, sodass daraufhin die Anforderung 176 an das ID-Provider-Computersystem 136 weitergeleitet wird, damit der Bezahlvorgang initiiert werden kann.

Zur Inanspruchnahme des ID-Provider-Computersystems 136 für die Initiierung oder Durchführung des Bezahlvorgangs aufgrund der Anforderung 176 wird beispielsweise wie folgt vorgegangen:

### 1. Authentifizierung des Nutzers 102 gegenüber dem ID-Token 106.

Der Nutzer 102 authentifiziert sich gegenüber dem ID-Token 106. Bei einer Implementierung mit PIN gibt der Nutzer 102 hierzu seine PIN beispielsweise über das Nutzer-Computersystem 100 oder einen daran angeschlossenen Chipkarten-Terminal ein. Durch Ausführung der Programminstruktionen 130 prüft dann der ID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.

### 2. Authentifizierung des ID-Provider-Computersystems 136 gegenüber dem ID-Token 106.

Hierzu wird eine Verbindung zwischen dem ID-Token 106 und dem ID-Provider-Computersystem 136 über das Nutzer-Computersystem 100 und das Netzwerk 116 hergestellt. Beispielsweise überträgt das ID-Provider-Computersystem 136 sein Zertifikat 144 über diese Verbindung an den ID-Token 106. Durch die Programminstruktionen 134 wird dann eine so genannte Challenge generiert, d.h. beispielsweise eine Zufallszahl.

Diese Zufallszahl wird mit dem in dem Zertifikat 144 beinhalteten öffentlichen Schlüssel des ID-Provider-Computersystems 136 verschlüsselt. Das resultierende Chiffrat wird von dem ID-Token 106 über die Verbindung an das ID-Provider-Computersystem 136 gesendet. Das ID-Provider-Computersystem 136 entschlüsselt das Chiffrat mit Hilfe seines privaten Schlüssels 142 und erhält so die Zufallszahl.

Die Zufallszahl sendet das ID-Provider-Computersystem 136 über die Verbindung an den ID-Token 106 zurück. Durch Ausführung der Programminstruktionen 134 wird dort geprüft, ob die von dem ID-Provider-Computersystem 136 empfangene Zufallszahl mit der ursprünglich generierten Zufallszahl, d.h. der Challenge, übereinstimmt. Ist dies der Fall, so gilt das ID-Provider-Computersystem 136 als gegenüber dem ID-Token 106 authentifiziert. Die Zufallszahl kann als symmetrischer Schlüssel für die Ende-zu-Ende Verschlüsselung verwendet werden.

### 3. Lesen zumindest eines Attributs aus dem ID-Token

In dem zumindest einen Zertifikat des ID-Provider-Computersystems 136 ist eine Leseberechtigung zum Lesen von zumindest einem Attribut des Nutzers 102, wie zum Beispiel von dessen ID-Token-Pseudonym angegeben. Im Weiteren wird ohne Beschränkung der Allgemeinheit davon ausgegangen, dass das ID-Token-Pseudonym des Nutzers als Nutzererkennung dient.

Nachdem sich der Nutzer 102 erfolgreich gegenüber dem ID-Token 106 authentifiziert hat, und nachdem sich das ID-Provider-Computersystem 136 erfolgreich gegenüber dem ID-Token 106 authentifiziert hat, erzeugt der ID-Token 106 das ID-Token-Pseudonym und das ID-Provider-Computersystem 136 erhält eine Leseberechtigung zum Auslesen zumindest des ID-Token-Pseudonyms.

Durch Ausführung der Programminstruktionen 147 erzeugt der ID-Token 106 aus dem privaten Schlüssel, der in dem Speicherbereich 122 gespeichert ist, sowie dem öffentlichen Schlüssel des Zertifikats 144 das ID-Token-Pseudonym und speichert dieses in dem Speicherbereich 125. Diese kryptografische Ableitung kann beispielsweise mittels EC-DH durch die Programminstruktionen 147 erfolgen.

Aufgrund eines entsprechenden Lesekommandos, welches das ID-Provider-Computersystem 136 über die Verbindung an den ID-Token 106 sendet, wird das ID-Token-Pseudonym aus dem geschützten Speicherbereich 125 ausgelesen und durch Ausführung der Programminstruktionen 132 verschlüsselt.

Das verschlüsselte ID-Token-Pseudonym und ggf. das verschlüsselte Attribut werden über die Verbindung an das ID-Provider-Computersystem 136 übertragen und dort durch Ausführung der Programminstruktionen 148 entschlüsselt. Dadurch erhält das ID-Provider-Computersystem 136 Kenntnis des aus dem ID-Token 106 ausgelesenen ID-Token-Pseudonyms und ggf. des Attributs.

### 4. Initiierung bzw. Durchführung des Bezahlvorgangs

Durch Ausführung der Programminstruktionen 192 greift das ID-Provider-Computersystem 136 mit Hilfe der so ermittelten Nutzerkennung des Nutzers 102 auf die Datenbank 182 zu, um die Bezahlinformation des Nutzers 102 auszulesen. Wenn die Bezahlinformation die Angabe "Prepaid" beinhaltet, so belastet das ID-Provider-Computersystem das entsprechende Prepaidkonto des Nutzers 102, indem es mit der Nutzerkennung auf die Datenbank 184 zugreift, und das Guthaben um den Bezahlbetrag verringert.

Wenn eine andere Bezahlinformation für den Nutzer 102 in der Datenbank 182 angegeben ist, wie zum Beispiel Kreditkartendaten oder die Zugriffsdaten für Online-Banking, so initiiert das ID-Provider-Computersystem 136 den Bezahlvorgang dementsprechend.

### 5. Bestätigung an das Dienst-Computersystem

Nach Durchführung bzw. Initiierung des Bezahlvorgangs generiert das ID-Provider-Computersystem 136 eine Antwort 178, die das ID-Provider-Computersystem 136 über das Netzwerk 116 an das Dienst-Computersystem 150 sendet. Die Antwort 178 beinhaltet eine Bestätigung des Bezahlvorgangs, beispielsweise den Bezahlbetrag, die Session-ID, welche das ID-Provider-Computersystem 136 mit der Anforderung 176 erhalten hat, sowie eine Signatur der Antwort 178, welche das ID-Provider-Computersystem 136 mit seinem privaten Schlüssel 142 erzeugt.

Das Dienst-Computersystem 150 liest die Session-ID aus der Antwort 178 und greift mit der Session-ID als Zugriffsschlüssel auf die Datenbank 180 zu, um die Antwort 178 mit dem entsprechenden Datenbankeintrag in der Datenbank 180 abzugleichen. Bei Übereinstimmung sendet das Dienst-Computersystem 150 eine Bestätigung 194 an das Nutzer-Computersystem 100. Dies erfolgt vorzugsweise im Rahmen der noch anhängigen Session.

Um einen Timeout des Internetbrowsers zu verhindern, kann das Dienst-Computersystem 150 nach Senden der Anforderung 176 mehrfach HTTP 102 senden.

Die Antwort 178 des ID-Provider-Computersystems 136, wie zum Beispiel eine SAML-Response, wird z.B. mittels SOAP/HTTP-Post an das Dienst-Computersystem 150 gesendet, und zwar entweder unmittelbar oder über das Nutzer-Computersystem 100.

Durch die Notwendigkeit der Authentifizierung des Nutzers 102 gegenüber dem ID-Token 106 und der Authentifizierung des ID-Provider-Computersystems 136 gegenüber dem ID-Token 106 ist der notwendige Vertrauensanker geschaffen, sodass das Dienst-Computersystem 150 sicher sein kann, dass das ihm von dem ID-Provider-Computersystem 136 mitgeteilte Antwort mit der Zahlungsbestätigung zutreffend ist.

Je nach Ausführungsform kann die Reihenfolge der Authentifizierung unterschiedlich sein. Beispielsweise kann vorgesehen sein, dass sich zunächst der Nutzer 102 gegenüber dem ID-Token 106 authentifizieren muss und nachfolgend das ID-Provider-Computersystem 136. Es ist aber grundsätzlich auch möglich, dass sich zunächst das ID-Provider-Computersystem 136 gegenüber dem ID-Token 106 authentifizieren muss und erst nachfolgend der Nutzer 102.

Für eine initiale Registrierung des Nutzers 102 kann beispielsweise wie folgt vorgegangen werden:
Der Nutzer 102 ruft mit Hilfe des Internetbrowsers seines Nutzer-Computersystems 100 eine Internetseite des ID-Provider-Computersystems 136 auf, um den Registrierungsvorgang zu starten. Der Nutzer 102 wählt hierzu auf der Internetseite des ID-Provider-Computersystems das von dem Nutzer 102 gewünschte Zahlungsverfahren aus, also zum Beispiel Prepaid, Kreditkarte oder Online-Banking, und gibt die hierzu erforderliche Bezahlinformation ein.

Zur Ermittlung der Nutzerkennung wird entsprechend den obigen Schritten 1. bis 3. vorgegangen, sodass das ID-Provider-Computersystem 136 das zumindest eine Attribut, das heißt beispielsweise das ID-Token-Pseudonym und damit die Nutzerkennung des Nutzers 102, erhält. Mit dieser Nutzerkennung als Zugriffsschlüssel werden die Bezahlinformationen des Nutzers 102 dann in der Datenbank 182 abgelegt.

Alternativ kann auch die Bezahlinformation selbst in einem geschützten Speicherbereich des ID-Tokens 106 gespeichert sein. In dem Zertifikat 144 des ID-Provider-Computersystems 136 müssen dann Leserechte für das Lesen der Bezahlinformation aus dem ID-Token 106 angegeben sein, damit das ID-Provider-Computersystem 136 die Bezahlinformation aus dem ID-Token 106 auslesen kann. Dies ist besonders vorteilhaft, da der Nutzer dann die Bezahlinformation nicht in die Internetseite des ID-Provider-Computersystems 136 eingeben muss.

Wenn der Nutzer 102 "Prepaid" als Bezahlinformation eingegeben hat, so wird durch das ID-Provider-Computersystem 136 ein Datenbankeintrag für den Nutzer 102 in der Datenbank 184 erzeugt, um ein Prepaidkonto anzulegen. Der Nutzer 102 kann sein Prepaidkonto beispielsweise durch Überweisung auf ein von dem ID-Provider-Computersystem 136 auf der Internetseite angegebenes Konto auffüllen. Alternativ kann der Nutzer 102 eine Prepaid-Telefonnummer angeben, für die ein Prepaidguthaben bei einem Mobilfunk-Provider hinterlegt ist, und auf welches das ID-Provider-Computersystem 136 zugreifen kann.

Nachdem das ID-Provider-Computersystem 136 die Nutzerkennung des Nutzers 102 aus dessen ID-Token 106 ermittelt hat, greift es auf die Datenbank 182 zu, um die Bezahlinformation dieses Nutzers auszulesen und um damit den Bezahlvorgang zu initiieren.

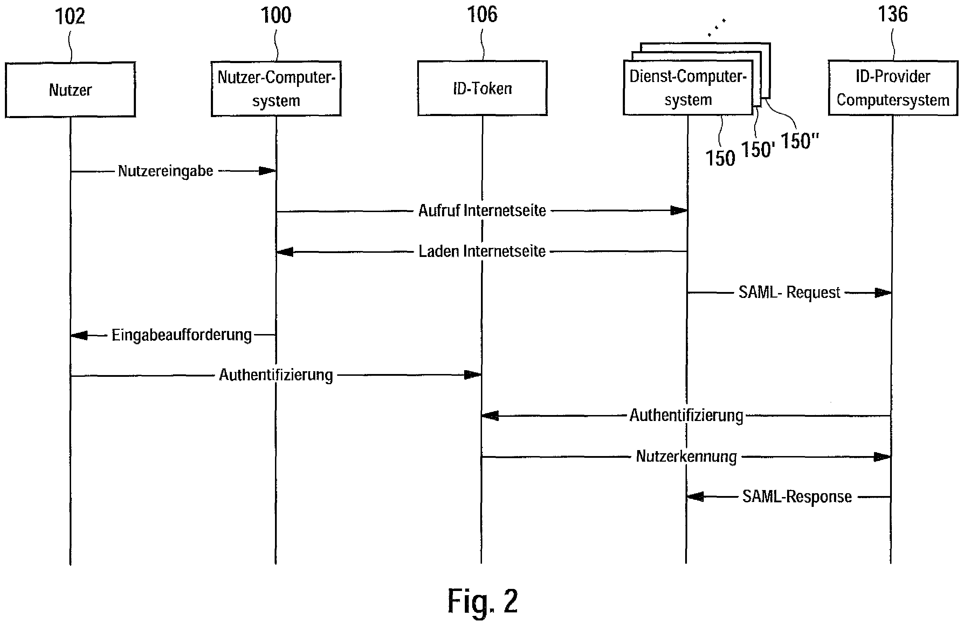

Die Figur 2 zeigt eine Ausführungsform eines erfindungsgemäßen Verfahrens anhand eines UML-Diagramms.

Durch eine Nutzereingabe eines Nutzers 102 in ein Nutzer-Computersystem 100, zum Beispiel durch Eingabe einer URL, wählt der Nutzer 102 ein bestimmtes Dienst-Computersystem aus, wie zum Beispiel das Dienst-Computersystem 150, von dem daraufhin auf das Nutzer-Computersystem 100 eine Internetseite geladen und auf einem Display des Nutzer-Computersystems 100 angezeigt wird.

Das Dienst-Computersystem 150 baut also mit dem Internetbrowser des Nutzer-Computersystems 100 eine Session auf, für welche das Dienst-Computersystem 150 eine Session-ID vergibt. Nach Eingabe einer Kaufentscheidung durch den Nutzer 102 erzeugt das Dienst-Computersystem 150 eine Anforderung 176, wie zum Beispiel in Form eines SAML-Requests, für die Bezahlung.

Diese Anforderung kann die Session-ID sowie auch eine Kennung des Dienst-Computersystems 150 beinhalten, wie zum Beispiel die URL der von dem Nutzer 102 aufgerufenen Internetseite oder eine andere, das Dienst-Computersystem 150 identifizierende URL. Diese Anforderung, beispielsweise also in Form eines SAML-Request, sendet das Dienst-Computersystem 150 an das ID-Provider-Computersystem 136, zum Beispiel durch ein HTTP-Post als SOAP-Nachricht.

Der SAML-Request kann - wie in der Figur 2 dargestellt - unmittelbar von dem Dienst-Computersystem 150 an das ID-Provider-Computersystem 136 gesendet werden. Alternativ sendet das Dienst-Computersystem den SAML-Request an das Nutzer-Computersystem 100, von wo der SAML-Request durch einen sogenannten Redirect an das ID-Provider-Computersystem 136 weitergeleitet wird, nachdem der Nutzer den SAML-Request bestätigt hat.

Beispielsweise beinhaltet die von dem Dienst-Computersystem 150 geladene Internetseite, weiche von dem Internetbrowser des Nutzer-Computersystems 100 angezeigt wird, eine Eingabeaufforderung an den Nutzer 102, damit sich dieser gegenüber dem ID-Token 106 authentifiziert.

Der Nutzer 102 authentifiziert sich daraufhin gegenüber dem ID-Token 106, beispielsweise durch Eingabe seiner PIN.

Ferner startet das ID-Provider-Computersystem 136 eine sogenannte eID-Session, um das ID-Token-Pseudonym aus dem ID-Token 106 auszulesen. Hierzu muss sich das ID-Provider-Computersystem 136 zunächst gegenüber dem ID-Token 106 authentifizieren, und zwar mit Hilfe des Zertifikats 144 (vergleiche Figur 1). Nachdem die Authentifizierung erfolgreich durchgeführt worden ist, erzeugt der ID-Token 106 aufgrund des Empfangs des Zertifikats 144 ein ID-Token-Pseudonym durch Ableitung aus dem privaten Schlüssel 122 des ID-Tokens 106 sowie aus dem öffentlichen Schlüssel des Zertifikats 144. Das so von dem ID-Token 106 erzeugte ID-Token-Pseudonym kann dann von dem ID-Provider-Computersystem 136 über einen geschützten Kanal mit Ende-zu-Ende-Verschlüsselung aus dem ID-Token 106 ausgelesen werden.

Die Authentifizierung des Nutzers 102 bzw. des ID-Provider-Computersystems 136 gegenüber dem ID-Token 106 kann zum Beispiel mit Hilfe des Extended Access Control-Protokolls durchgeführt werden, so wie es von der Internationalen Luftfahrtbehörde (ICAO) spezifiziert ist. Um den Nutzer 102 über den Zweck des Lesezugriffs auf den ID-Token 106 zu informieren, kann von dem ID-Provider-Computersystem 136 eine entsprechende Information an das Nutzer-Computersystem 100 gesendet werden, und zwar beispielsweise in dem Feld "TransactionInfo" gemäß dem EAC-Protokoll. Das Feld TransactionInfo ist in BSI -Technical Guideline, eCard-API-Framework - Protocols, BSI TR-03112-7, Version: 1.1.1, 23.05.2011 spezifiert.

Das von dem ID-Provider-Computersystem 136 an den ID-Token 106 gesendete Zertifikat wird für die Durchführung des EAC-Protokolls verwendet. Hierzu verifiziert der ID-Token 106 das Zertifikat und speichert den öffentlichen Schlüssel des Zertifikats zum Beispiel in seinen RAM. Daraufhin initiiert das ID-Provider-Computersystem 136 die Erzeugung des ID-Token-Pseudonyms, indem es eine entsprechende Anforderung an den ID-Token 106 zum Beispiel in Form einer sogenannten APDU sendet. Der ID-Token 106 erzeugt daraufhin aus dem öffentlichen Schlüssel des Zertifikats und seinem privaten Schlüssel das ID-Token-Pseudonym.

Nach Erhalt des ID-Token-Pseudonyms, das heißt beispielsweise des sogenannten RID, greift das ID-Provider-Computersystem 136 auf seine Datenbank 182 um die Bezahlinformation mit der Nutzerkennung, d.h. hier dem ID-Token-Pseudonym, auszulesen und den Zahlungsvorgang dementsprechend durchzuführen bzw. zu initiieren.

Das ID-Provider-Computersystem 136 erzeugt dann die Antwort 178, wie zum Beispiel eine SAML-Response, die mittels SOAP/HTTP-Post an das Dienst-Computersystem 150 gesendet wird, und zwar entweder unmittelbar oder über das Nutzer-Computersystem 100.

### Bezugszeichenliste

- 100: Nutzer-Computersystem
- 102: Nutzer
- 104: Schnittstelle
- 106: ID-Token
- 108: Schnittstelle
- 110: Prozessor
- 112: Programminstruktionen
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 125: geschützter Speicherbereich
- 126: Speicherbereich
- 128: Prozessor
- 130: Programminstruktionen
- 132: Programminstruktionen
- 134: Programminstruktionen
- 136: I D-Provider-Computersystem
- 138: Netzwerk-Schnittstelle
- 140: Speicher
- 142: privater Schlüssel
- 144: Zertifikat
- 145: Prozessor
- 146: Programminstruktionen
- 147: Programminstruktionen
- 148: Programminstruktionen
- 149: Programminstruktionen
- 150: Dienst-Computersystem
- 150': Dienst-Computersystem
- 150": Dienst-Computersystem
- 152: Netzwerk-Schnittstelle
- 154: Prozessor
- 156: Programminstruktionen
- 176: Anforderung
- 178: Antwort
- 180: Datenbank
- 182: Datenbank
- 184: Datenbank
- 186: Programminstruktionen
- 188: Kreditkartenserver
- 190: Bankserver
- 192: Programminstruktionen
- 194: Bestätigung

## Patentansprüche

1. Computerimplementiertes Bezahlverfahren, wobei für jeden registrierten Nutzer (102) eine Bezahlinformation in einem elektronischen Speicher (182) gespeichert wird, wobei jedem der Nutzer eine Nutzerkennung durch einen ID-Token (106) des betreffenden Nutzers zugeordnet wird, und die Bezahlinformation eines Nutzers mit dessen Nutzerkennung abrufbar ist, mit folgenden Schritten:
- Aufbau einer Session zwischen einem Internetbrowser eines Nutzer-Computersystems (100) und einem Dienst-Computersystem (150) über ein Netzwerk (116) zum Aufruf einer Internetseite, wobei durch das Dienst-Computersystem eine Session-ID für die Session vergeben wird,
- Eingabe einer Auswahl eines Dienstes auf der Internetseite durch den Nutzer,
- Speicherung einer Zuordnung (180) der eingegebenen Auswahl und der Session-ID durch das Dienst-Computersystem,
- Erzeugung einer Anforderung (176) durch das Dienst-Computersystem, wobei die Anforderung zumindest einen Bezahlbetrag für die Bezahlung des ausgewählten Dienstes, einen Zahlungsempfänger-Identifikator zur Identifizierung des Zahlungsempfängers und die Session-ID beinhaltet, und wobei die Aufforderung von dem Dienst-Computersystem signiert wird,
- Übertragung der Anforderung von dem Dienst-Computersystem an das Nutzer-Computersystem,
- nach Eingabe einer Bestätigung durch den Nutzer in das Nutzer-Computersystem, Weiterleitung der Anforderung an ein ID-Provider-Computersystem (136) von dem Nutzer-Computersystem,
- Durchführung eines Lesezugriffs auf den ID-Token des Nutzers von dem ID-Provider-Computersystem über das Netzwerk und das Nutzer-Computersystem, um zumindest ein in dem ID-Token gespeichertes Attribut aus dem ID-Token zur Ermittlung der Nutzerkennung auszulesen, nachdem sich der Nutzer und das ID-Provider-Computersystem gegenüber dem ID-Token authentifiziert haben,
- Übertragung des zumindest einen Attributs von dem ID-Token zu dem ID-Provider-Computersystem über das Netzwerk und über das Nutzer-Computersystem mit Ende-zu-Ende-Verschlüsselung,
- Lesen der Bezahlinformation des Nutzers aus dem elektronischen Speicher mithilfe der Nutzerkennung durch das ID-Provider-Computersystem,
- Initiierung des Bezahlungsvorgangs mithilfe der Bezahlinformation entsprechend des Bezahlbetrags an den Zahlungsempfänger durch das ID-Provider-Computersystem,
- Erzeugung einer Antwort (178) auf die Anforderung durch das ID-Provider-Computersystem, wobei die Antwort eine Bestätigung der Auslösung des Bezahlvorgangs und die Session-ID beinhaltet und durch das ID-Provider-Computersystem signiert ist,
- Übertragung der Antwort von dem ID-Provider-Computersystem an das Dienst-Computersystem über das Netzwerk,
wobei durch das ID-Provider-Computersystem ein Zertifikat (144) gespeichert wird, in dem zumindest ein Attribut spezifiziert ist, für welches das ID-Provider-Computersystem ein Leserecht für den Lesezugriff hat,
wobei es sich bei dem zumindest einen Attribut um zumindest ein persönliches Attribut des Nutzers handelt und/oder ein Pseudonym des Nutzers, wobei von dem ID-Provider-Computersystem ein Prepaidkonto (184) des Nutzers gespeichert wird, wobei die Bezahlinformation ein Prepaid-Bezahlverfahren spezifiziert und das ID-Provider-Computersystem das Prepaidkonto mit dem Bezahlbetrag belastet,
wobei das ID-Provider-Computersystem eine Datenbank umfasst, in der die Registrierdaten der registrierten Nutzer gespeichert sind, wobei für jeden registrierten Nutzer eine Bezahlinformation in der Datenbank gespeichert ist, auf welche mit Hilfe eine Nutzerkennung des betreffenden Nutzers als Zugriffsschlüssel zugegriffen werden kann, wobei es sich bei der Nutzerkennung um zumindest das Pseudonym des Nutzers handelt.

2. Bezahlverfahren nach Anspruch 1, wobei das Dienst-Computersystem nach der Zuordnung des Bezahlvorgangs eine Bestätigung (194) generiert und die Bestätigung von dem Dienst-Computersystem über die Session an den Internetbrowser des Nutzer-Computersystems übertragen wird.

3. Bezahlverfahren nach Anspruch 2, wobei das Dienst-Computersystem bis zu der Übertragung der Bestätigung ein oder mehrere Signale innerhalb der Session an den Internetbrowser des Nutzer-Computersystems sendet, um ein Timeout des Internetbrowsers nach der Eingabe der Auswahl zu verhindern, wobei es sich bei dem Signal vorzugsweise um HTTP 102 handelt.

4. Bezahlverfahren nach Anspruch 1, 2 oder 3, wobei es sich bei der Anforderung um einen SAML-Request und bei der Antwort des ID-Provider-Computersystems um eine SAML-Response handelt.

5. Bezahlverfahren nach einem der vorhergehenden Ansprüche, wobei die Authentifizierung des ID-Provider-Computersystems gegenüber dem ID-Token mithilfe eines Zertifikats (144) des ID-Provider-Computersystems erfolgt.

6. Bezahlverfahren nach einem der vorhergehenden Ansprüche, wobei die Bezahlinformation eine Bankverbindung des Nutzers oder Kreditkartendaten des Nutzers beinhaltet.

7. Bezahlverfahren nach einem der vorhergehenden Ansprüche, wobei zur Registrierung eines der Nutzer die folgenden Schritte durchgeführt werden:
- Aufruf einer Internetseite des ID-Provider-Computersystems von dem Nutzer-Computersystem des Nutzers,
- Eingabe einer Registrierungs-Anforderung in die Internetseite durch den Nutzer,
- Eingabe der Bezahlinformation des Nutzers,
- Durchführung eines Lesezugriffs auf den ID-Token des Nutzers von dem ID-Provider-Computersystem über das Netzwerk und über das Nutzer-Computersystem, um zumindest ein in dem ID-Token gespeichertes Attribut aus dem ID-Token zur Ermittlung der Nutzerkennung auszulesen, nachdem sich der Nutzer und das ID-Provider-Computersystem gegenüber dem ID-Token authentifiziert haben,
- Übertragung des zumindest einen Attributs von dem ID-Token zu dem ID-Provider-Computersystem über das Netzwerk und über das Nutzer-Computersystem mit Ende-zu-Ende-Verschlüsselung,
- Speicherung der Bezahlinformation in dem elektronischen Speicher mit der Nutzerkennung als Zugriffsschlüssel.

8. Computerprogrammprodukt, insbesondere digitales Speichermedium, mit ausführbaren Instruktionen zur Durchführung eines computerimplementierten Bezahlverfahrens nach einem der vorhergehenden Ansprüche.

9. ID-Provider-Computersystem zur Durchführung eines computerimplementierten Bezahlverfahrens mit
- Mitteln (138) zum Empfang einer Anforderung (176) über ein Netzwerk (116) von einem Nutzer-Computersystem (100), wobei die Anforderung zumindest einen Bezahlbetrag für die Bezahlung eines von dem Nutzer ausgewählten Dienstes, einen Zahlungsempfänger-Identifikator zur Identifizierung eines Zahlungsempfängers und eine Session-ID beinhaltet, wobei die Aufforderung von einem Dienst-Computersystem signiert ist,
- Speichermitteln (182) zur Speicherung von Nutzerregistrierungen, wobei jede der Nutzerregistrierungen zumindest eine Bezahlinformation des betreffenden Nutzers beinhaltet, auf welche mithilfe einer Nutzerkennung als Zugriffsschlüssel durch das ID-Provider-Computersystem zugegriffen werden kann,
- Mitteln (146) zur Durchführung eines Lesezugriffs über das Netzwerk und über das Nutzer-Computersystem auf einen ID-Token (106) des Nutzers, um zumindest ein in dem ID-Token gespeichertes Attribut aus dem ID-Token zur Ermittlung der Nutzerkennung auszulesen, nachdem sich der Nutzer und das ID-Provider-Computersystem gegenüber dem ID-Token authentifiziert haben,
- Mitteln (148) zum Empfang des Attributs von dem ID-Token über das Netzwerk und über das Nutzer-Computersystem mit Ende-zu-Ende-Verschlüsselung,
- Mitteln (192) zum Lesen der Bezahlinformation des Nutzers aus dem elektronischen Speicher mithilfe der Nutzerkennung,
- Mitteln (192) zur Initiierung des Bezahlvorgangs mithilfe der Bezahlinformation entsprechend des Bezahlbetrags an den Zahlungsempfänger,
- Mitteln (192) zur Erzeugung einer Antwort auf die Anforderung, wobei die Antwort eine Bestätigung der Auslösung des Bezahlvorgangs und die Session-ID beinhaltet, und wobei die Antwort durch das ID-Provider-Computersystem signiert ist,
- Mitteln (138) zur Sendung der Antwort an das Dienst-Computersystem über das Netzwerk,
wobei durch das ID-Provider-Computersystem ein Zertifikat (144) gespeichert wird, in dem zumindest ein Attribut spezifiziert ist, für welches das ID-Provider-Computersystem ein Leserecht für den Lesezugriff hat,
wobei es sich bei dem zumindest einen Attribut um zumindest ein persönliches Attribut des Nutzers handelt und/oder ein Pseudonym des Nutzers,
wobei von dem ID-Provider-Computersystem ein Prepaidkonto (184) des Nutzers gespeichert wird, wobei die Bezahlinformation ein Prepaid-Bezahlverfahren spezifiziert und das ID-Provider-Computersystem das Prepaidkonto mit dem Bezahlbetrag belastet,
wobei das ID-Provider-Computersystem eine Datenbank umfasst, in der die Registrierdaten der registrierten Nutzer gespeichert sind, wobei für jeden registrierten Nutzer eine Bezahlinformation in der Datenbank gespeichert ist, auf welche mit Hilfe eine Nutzerkennung des betreffenden Nutzers als Zugriffsschlüssel zugegriffen werden kann, wobei es sich bei der Nutzerkennung um zumindest das Pseudonym des Nutzers handelt.

10. ID-Provider-Computersystem nach Anspruch 9, mit einem gespeicherten Zertifikat (144), in dem das oder die Attribute spezifiziert sind, für welche das ID-Provider-Computersystem ein Leserecht für den Lesezugriff hat.

11. ID-Provider-Computersystem nach Anspruch 9 oder 10, mit Mitteln (186) zur Registrierung eines Nutzers, wobei die Mittel zur Registrierung für die Durchführung der folgenden Schritte ausgebildet sind:
- Aufruf einer Internetseite des ID-Provider-Computersystems von dem Nutzer-Computersystem des Nutzers,
- Eingabe einer Registrierungs-Anforderung in die Internetseite durch den Nutzer,
- Eingabe der Bezahlinformation des Nutzers,
- Durchführung eines Lesezugriffs auf den ID-Token des Nutzers von dem ID-Provider-Computersystem über das Netzwerk und über das Nutzer-Computersystem, um zumindest ein in dem ID-Token gespeichertes Attribut aus dem ID-Token zur Ermittlung der Nutzerkennung auszulesen, nachdem sich der Nutzer und das ID-Provider-Computersystem gegenüber dem ID-Token authentifiziert haben,
- Übertragung des zumindest einen Attributs von dem ID-Token zu dem ID-Provider-Computersystem über das Netzwerk und über das Nutzer-Computersystem mit Ende-zu-Ende-Verschlüsselung,
- Speicherung der Bezahlinformation in dem elektronischen Speicher mit der Nutzerkennung als Zugriffsschlüssel.

12. Datenverarbeitungssystem mit einem ID-Provider-Computersystem und zumindest einem ID-Token (106) eines registrierten Nutzers (102), wobei der ID-Token
- einen geschützten Speicherbereich (124) zur Speicherung von zumindest einem Attribut,
- Mittel (120, 130) zur Authentifizierung des dem ID-Token zugeordneten Nutzers (102) gegenüber dem IT-Token,
- Mittel (134) zur Authentifizierung des ID-Provider-Computersystems (136) gegenüber dem IT-Token,
- Mittel (132) zum Aufbau der geschützten Verbindung mit Ende-zu-Ende-Verschlüsselung zu dem ID-Provider-Computersystem, über die das ID-Provider-Computersystem das zumindest eine Attribut auslesen kann,
aufweist, wobei eine notwendige Voraussetzung für das Auslesen des zumindest einen Attributs aus dem ID-Token durch das ID-Provider-Computersystem die erfolgreiche Authentifizierung des Nutzers und des ID-Provider-Computersystems gegenüber dem ID-Token ist.
und/oder mit zumindest einem Dienst-Computersystem (150), wobei das Dienst-Computersystem einen Speicher (180) zur Speicherung einer Zuordnung der von dem Nutzer eingegebenen Auswahl und der Session-ID aufweist
wobei durch das ID-Provider-Computersystem ein Zertifikat (144) gespeichert wird, in dem zumindest ein Attribut spezifiziert ist, für welches das ID-Provider-Computersystem ein Leserecht für den Lesezugriff hat,
wobei es sich bei dem zumindest einen Attribut um zumindest ein persönliches Attribut des Nutzers handelt und/oder ein Pseudonym des Nutzers,
wobei von dem ID-Provider-Computersystem ein Prepaidkonto (184) des Nutzers gespeichert wird, wobei die Bezahlinformation ein Prepaid-Bezahlverfahren spezifiziert und das ID-Provider-Computersystem das Prepaidkonto mit dem Bezahlbetrag belastet,
wobei das ID-Provider-Computersystem eine Datenbank umfasst, in der die Registrierdaten der registrierten Nutzer gespeichert sind, wobei für jeden registrierten Nutzer eine Bezahlinformation in der Datenbank gespeichert ist, auf welche mit Hilfe eine Nutzerkennung des betreffenden Nutzers als Zugriffsschlüssel zugegriffen werden kann, wobei es sich bei der Nutzerkennung um zumindest das Pseudonym des Nutzers handelt.

## Claims

1. A computer-implemented payment method, wherein for each registered user (102) an item of payment information is stored in an electronic memory (182), wherein a user code is assigned to each of the users by means of an ID token (106) of the user in question and the item of payment information of a user can be retrieved using the user code thereof, said method comprising the following steps:
- creating a session between an Internet browser of a user computer system (100) and a service computer system (150) via a network (116) for calling up a website, wherein a session ID for the session is allocated by the service computer system;
- inputting a selection of a service on the website by the user;
- storing an assignment (180) of the inputted selection and the session ID by the service computer system;
- generating a request (176) by the service computer system, wherein the request contains at least one payment amount for paying for the selected service, a payment recipient identifier for identifying the payment recipient, and the session ID, and wherein the request is signed by the service computer system;
- transferring the request from the service computer system to the user computer system;
- once the user has input a confirmation in the user computer system, forwarding of the request from the user computer system to an ID provider computer system (136);
- effecting a read access to the ID token of the user from the ID provider computer system via the network and the user computer system, in order to read out at least one attribute stored in the ID token from the ID token for determining the user code, once the user and the ID provider computer system have been authenticated to the ID token;
- transferring the at least one attribute from the ID token to the ID provider computer system via the network and via the user computer system with end-to-end encryption;
- reading the item of payment information of the user from the electronic memory using the user code by the ID provider computer system;
- initiating the payment transaction using the item of payment information according to the payment amount to the payment recipient by the ID provider computer system;
- generating a response (178) to the request by the ID provider computer system, wherein the response contains a confirmation that the payment transaction has been triggered and the session ID, and is signed by the ID provider computer system;
- transferring the response from the ID provider computer system to the service computer system via the network;
wherein a certificate (144) is stored by the ID provider computer system, in which certificate at least one attribute for which the ID provider computer system has read access is specified,
wherein the at least one attribute is at least one personal attribute of the user and/or a pseudonym of the user,
wherein a prepaid account (184) of the user is stored by the ID provider computer system, wherein the item of payment information specifies a prepaid payment method and the ID provider computer system loads the prepaid account with the payment amount,
wherein the ID provider computer system comprises a database, in which the registration data of the registered users are stored, wherein an item of payment information is stored in the database for each registered user and can be accessed using the user code of the user in question as access key, wherein the user code is at least the pseudonym of the user.

2. The payment method according to claim 1, wherein the service computer system generates a confirmation (194) after the assignment of the payment transaction, and the confirmation is transferred from the service computer system to the Internet browser of the user computer system via the session.

3. The payment method according to claim 2, wherein the service computer system sends one or more signals within the session to the Internet browser of the user computer system until the transfer of the confirmation so as to prevent a timeout of the Internet browser following the input of the selection, wherein the signal is preferably HTTP 102.

4. The payment method according to claim 1, 2 or 3, wherein the request is a SAML request and the response of the ID provider computer system is a SAML response.

5. The payment method according to any one of the preceding claims, wherein the ID provider computer system is authenticated to the ID token using a certificate (144) of the ID provider computer system.

6. The payment method according to any one of the preceding claims, wherein the item of payment information includes bank details of the user or credit card data of the user.

7. The payment method according to any one of the preceding claims, wherein, for the registration of one of the users, the following steps are performed:
- calling up a website of the ID provider computer system by the user computer system of the user;
- inputting a registration request into the website by the user;
- inputting the item of payment information of the user;
- effecting a read access to the ID token of the user from the ID provider computer system via the network and via the user computer system, in order to read out at least one attribute stored in the ID token from the ID token for determining the user code, once the user and the ID provider computer system have been authenticated to the ID token;
- transferring the at least one attribute from the ID token to the ID provider computer system via the network and via the user computer system with end-to-end encryption;
- storing the item of payment information in the electronic memory with the user code as access key.

8. A computer program product, in particular a digital memory medium, with executable instructions for effecting a computer-implement payment method according to any one of the preceding claims.

9. An ID provider computer system for effecting a computer-implemented payment method, comprising:
- means (138) for receiving a request (176) via a network (116) from a user computer system (100), wherein the request includes at least one payment amount for the payment of a service selected by the user, a payment recipient identifier for identifying a payment recipient, and a session ID, wherein the request is signed by a service computer system;
- storage means (182) for storing user registrations, wherein each of the user registrations includes at least one item of payment information of the user in question, which can be accessed using a user code as access key by the ID provider computer system;
- means (146) for effecting a read access via the network and via the user computer system to an ID token (106) of the user so as to read out at least one attribute stored in the ID token from the ID token in order to determine the user code, once the user and the ID provider computer system have been authenticated to the ID token;
- means (148) for receiving the attribute from the ID token via the network and via the user computer system with end-to-end encryption;
- means (192) for reading the item of payment information of the user from the electronic memory using the user identifier;
- means (192) for initiating the payment transaction using the item of payment information according to the payment amount to the payment recipient;
- means (192) for generating a response to the request, wherein the response includes a confirmation of the triggering of the payment transaction and the session ID, and wherein the response is signed by the ID provider computer system;
- means (138) for sending the response to the service computer system via the network;
wherein a certificate (144) is stored by the ID provider computer system, in which certificate at least one attribute for which the ID provider computer system has read access is specified,
wherein the at least one attribute is at least one personal attribute of the user and/or a pseudonym of the user,
wherein a prepaid account (184) of the user is stored by the ID provider computer system, wherein the item of payment information specifies a prepaid payment method and the ID provider computer system loads the prepaid account with the payment amount,
wherein the ID provider computer system comprises a database, in which the registration data of the registered users are stored, wherein an item of payment information is stored in the database for each registered user and can be accessed using the user code of the user in question as access key, wherein the user code is at least the pseudonym of the user.

10. The ID provider computer system according to claim 9, with a stored certificate (144), in which the attribute(s) for which the ID provider computer system has read access is/are specified.

11. The ID provider computer system according to claim 9 or 10, comprising means (186) for registering a user, wherein the means for registering are designed to carry out the following steps:
- calling up a website of the ID provider computer system by the user computer system of the user;
- inputting a registration request into the website by the user;
- inputting the item of payment information of the user;
- effecting a read access to the ID token of the user from the ID provider computer system via the network and via the user computer system, in order to read out at least one attribute stored in the ID token from the ID token for determining the user code, once the user and the ID provider computer system have been authenticated to the ID token;
- transferring the at least one attribute from the ID token to the ID provider computer system via the network and via the user computer system with end-to-end encryption;
- storing the item of payment information in the electronic memory with the user code as access key.

12. A data processing system comprising an ID provider computer system and at least one ID token (106) of a registered user (102), wherein the ID token has:
- a protected memory area (124) for storing at least one attribute;
- means (120, 130) for authenticating the user (102) assigned to the ID token to the ID token;
- means (134) for authenticating the ID provider computer system (136) to the ID token;
- means (132) for creating the protected connection with end-to-end encryption to the ID provider computer system, via which the ID provider computer system can read out the at least one attribute;
wherein a necessary precondition for the reading out of the at least one attribute from the ID token by the ID provider computer system is the successful authentication of the user and of the ID provider computer system to the ID token,
and/or comprising at least one service computer system (150), wherein the service computer system has a memory (180) for storing an assignment of the selection input by the user and the session ID,
wherein a certificate (144) is stored by the ID provider computer system, in which certificate at least one attribute for which the ID provider computer system has read access is specified,
wherein the at least one attribute is at least one personal attribute of the user and/or a pseudonym of the user,
wherein a prepaid account (184) of the user is stored by the ID provider computer system, wherein the item of payment information specifies a prepaid payment method and the ID provider computer system loads the prepaid account with the payment amount,
wherein the ID provider computer system comprises a database, in which the registration data of the registered users are stored, wherein an item of payment information is stored in the database for each registered user and can be accessed using the user code of the user in question as access key, wherein the user code is at least the pseudonym of the user.

## Revendications

1. Procédé de paiement informatisé, dans lequel, pour chaque utilisateur enregistré (102), une information de paiement est stockée dans une mémoire électronique (182), dans lequel, à chaque utilisateur est associée une identification d'utilisateur par un jeton ID (106) de l'utilisateur concerné, et l'information de paiement d'un utilisateur est accessible avec son identification d'utilisateur, avec les étapes suivantes :
- établissement d'une session entre un navigateur internet d'un système informatique d'utilisateur (100) et un système informatique de service (150) par le biais d'un réseau (116) pour l'appel d'une page internet, où un ID de session pour la session est donné par le système informatique de service,
- saisie d'une sélection d'un service sur la page internet par l'utilisateur,
- stockage d'une allocation (180) de la sélection indiquée et de l'ID de session par le système informatique de service,
- génération d'une requête (176) par le système informatique de service, où la requête contient au moins un montant de paiement pour le paiement du service choisi, un identificateur du bénéficiaire du paiement pour l'identification du bénéficiaire du paiement et l'ID de session, et où la requête est signée par le système informatique de service,
- transmission de la requête du système informatique de service vers le système informatique d'utilisateur,
- après l'indication d'une confirmation par l'utilisateur dans le système informatique d'utilisateur, poursuite de la transmission vers un système informatique de fournisseur d'ID (136) à partir du système informatique d'utilisateur,
- exécution d'un accès en lecture du jeton ID de l'utilisateur à partir du système informatique du fournisseur d'ID par le biais du réseau et du système informatique d'utilisateur afin de lire au moins un attribut stocké dans le jeton ID à partir du jeton ID pour la détermination de l'identification d'utilisateur après que l'utilisateur et le système informatique du fournisseur d'ID se soient authentifiés vis-à-vis du jeton ID,
- transmission de l'au moins un attribut du jeton ID vers le système informatique du fournisseur d'ID par le biais du réseau et par le biais du système informatique d'utilisateur avec un cryptage de bout en bout,
- lecture de l'information de paiement de l'utilisateur à partir de la mémoire électronique à l'aide de l'identification d'utilisateur par le système informatique du fournisseur d'ID,
- initialisation du processus de paiement à l'aide de l'information de paiement correspondant au montant de paiement vers le bénéficiaire du paiement par le système informatique du fournisseur d'ID,
- génération d'une réponse (178) à la requête par le système informatique du fournisseur d'ID, où la réponse contient une confirmation de la sélection du processus de paiement et l'ID de session et est signée par le système informatique du fournisseur d'ID,
- transmission de la réponse du système informatique du fournisseur d'ID vers le système informatique de service par le biais du réseau,
où un certificat (144), dans lequel au moins un attribut est spécifié pour lequel le système informatique du fournisseur d'ID a une autorisation de lecture pour un accès de lecture, est stocké par le système informatique du fournisseur d'ID,
où, dans le cas de l'au moins un attribut, il s'agit d'au moins un attribut personnel de l'utilisateur et/ou d'un pseudonyme de l'utilisateur,
où un compte prépayé (184) de l'utilisateur est stocké par le système informatique du fournisseur d'ID, où l'information de paiement spécifie un procédé de paiement prépayé et le système informatique du fournisseur d'ID impute le montant de paiement au compte prépayé,
où le système informatique du fournisseur d'ID comprend une banque de données, dans laquelle les données d'enregistrement de l'utilisateur enregistré sont stockées, où, pour chaque utilisateur enregistré, une information de paiement est stockée dans la banque de données à laquelle on peut avoir accès à l'aide d'une identification d'utilisateur de l'utilisateur concerné sous la forme d'une clé d'accès, où, dans le cas de l'identification d'utilisateur, il s'agit au moins du pseudonyme de l'utilisateur.

2. Procédé de paiement selon la revendication 1, dans lequel le système informatique de service génère une confirmation (194) après l'allocation du processus de paiement et la confirmation est transmise du système informatique de service vers le navigateur internet du système informatique d'utilisateur par le biais de la session.

3. Procédé de paiement selon la revendication 2, dans lequel le système informatique de service, jusqu'à la transmission de la confirmation, envoie un ou plusieurs signaux vers le navigateur internet du système informatique d'utilisateur en l'espace de la session afin d'éviter une pause du navigateur internet après la saisie de la sélection, où, dans le cas du signal, il s'agit de préférence d'http 102.

4. Procédé de paiement selon la revendication 1, 2 ou 3, dans lequel, dans le cas de la requête, il s'agit d'une requête SAML et, dans le cas de la réponse du système informatique du fournisseur d'ID, il s'agit d'une réponse SAML.

5. Procédé de paiement selon l'une des revendications précédentes, dans lequel l'authentification du système informatique du fournisseur d'ID a lieu par rapport au jeton ID à l'aide d'un certificat (144) du système informatique du fournisseur d'ID.

6. Procédé de paiement selon l'une des revendications précédentes, dans lequel l'information de paiement contient une liaison bancaire de l'utilisateur ou des données de cartes de crédit de l'utilisateur.

7. Procédé de paiement selon l'une des revendications précédentes, dans lequel, pour l'enregistrement d'un des utilisateurs, les étapes suivantes sont exécutées :
- appel d'une page internet du système informatique du fournisseur d'ID par le système informatique d'utilisateur de l'utilisateur,
- saisie d'une requête d'enregistrement dans la page internet par l'utilisateur,
- saisie de l'information de paiement de l'utilisateur,
- exécution d'un accès en lecture dans le jeton ID de l'utilisateur par le système informatique de fournisseur d'ID par le biais du réseau et par le biais du système informatique d'utilisateur afin de lire au moins un attribut enregistré dans le jeton ID à partir du jeton ID pour la détermination de l'identification d'utilisateur après que l'utilisateur et le système informatique du fournisseur d'ID se soient authentifiés vis-à-vis du jeton ID,
- transmission de l'au moins un attribut du jeton Id vers le système informatique du fournisseur d'ID par le biais du réseau et par le biais du système informatique d'utilisateur avec un cryptage de bout en bout,
- stockage de l'information de paiement dans la mémoire électronique avec l'identification d'utilisateur en tant que clé d'accès.

8. Produit de programme d'ordinateur, notamment support de stockage numérique, avec des instructions exécutables pour l'exécution d'un procédé de paiement informatisé selon l'une des revendications précédentes.

9. Système informatique de fournisseur d'ID pour l'exécution d'un procédé de paiement informatisé avec
- des moyens (138) destinés à la réception d'une requête (176) par le biais d'un réseau (116) d'un système informatique d'utilisateur (100), où la requête contient au moins un montant de paiement pour le paiement d'un service choisi par l'utilisateur, un identificateur de bénéficiaire de paiement pour l'identification d'un bénéficiaire de paiement et un ID de session, où la requête est signée par un système informatique de service,
- des moyens de stockage (182) destinés au stockage d'enregistrements d'utilisateurs, où chacun des enregistrements d'utilisateurs contient au moins une information de paiement de l'utilisateur concerné, à laquelle on peut avoir accès à l'aide d'une identification d'utilisateur en tant que clé d'accès par le système informatique du fournisseur d'ID,
- des moyens (146) destinés à l'exécution d'un accès en lecture par le biais du réseau et par le biais du système informatique d'utilisateur vis-à-vis d'un jeton ID (106) de l'utilisateur afin de lire au moins un attribut stocké dans le jeton ID à partir du jeton ID pour la détermination de l'identification d'utilisateur après que l'utilisateur et le système informatique du fournisseur d'ID se soient authentifiés vis-à-vis du jeton d'ID,
- des moyens (148) destinés à la réception d'un attribut par le jeton ID par le biais du réseau et par le biais du système informatique d'utilisateur avec un cryptage de bout en bout,
- des moyens (192) destinés à la lecture de l'information de paiement de l'utilisateur à partir de la mémoire électronique à l'aide de l'identification d'utilisateur,
- des moyens (192) destinés à l'initialisation de processus de paiement à l'aide de l'information de paiement correspondant au montant de paiement auprès du bénéficiaire du paiement,
- des moyens (192) destinés à la génération d'une réponse à la requête, où la réponse contient une confirmation du déclenchement du processus de paiement et l'ID de session, et où la réponse est signée par le système informatique du fournisseur d'ID,
- des moyens (138) destinés à l'envoi de la réponse au système informatique de service par le biais du réseau,
où un certificat (144), dans lequel au moins un attribut est spécifié pour lequel le système informatique du fournisseur d'ID a une autorisation de lecture pour un accès de lecture, est stocké par le système informatique du fournisseur d'ID,
où, dans le cas de l'au moins un attribut, il s'agit d'au moins un attribut personnel de l'utilisateur et/ou d'un pseudonyme de l'utilisateur,
où un compte prépayé (184) de l'utilisateur est stocké par le système informatique du fournisseur d'ID, où l'information de paiement spécifie un procédé de paiement prépayé et le système informatique du fournisseur d'ID impute le montant de paiement au compte prépayé,
où le système informatique du fournisseur d'ID comprend une banque de données, dans laquelle les données d'enregistrement de l'utilisateur enregistré sont stockées, où, pour chaque utilisateur enregistré, une information de paiement est stockée dans la banque de données à laquelle on peut avoir accès à l'aide d'une identification d'utilisateur de l'utilisateur concerné sous la forme d'une clé d'accès, où, dans le cas de l'identification d'utilisateur, il s'agit au moins du pseudonyme de l'utilisateur.

10. Système informatique de fournisseur d'ID selon la revendication 9, avec un certificat (144) enregistré dans lequel l'attribut ou les attributs sont spécifiés pour lesquels le système informatique du fournisseur d'ID a une autorisation de lecture pour l'accès en lecture.

11. Système informatique de fournisseur d'ID selon la revendication 9 ou 10, doté de moyens (186) destinés à l'enregistrement d'un utilisateur, où les moyens destinés à l'enregistrement sont conçus pour l'exécution des étapes suivantes :
- l'appel d'une page internet du système informatique du fournisseur d'ID par le système informatique d'utilisateur de l'utilisateur,
- la saisie d'une requête d'enregistrement dans la page internet par l'utilisateur,
- la saisie de l'information de paiement de l'utilisateur,
- l'exécution d'un accès en lecture dans le jeton ID de l'utilisateur par le système informatique de fournisseur d'ID par le biais du réseau et par le biais du système informatique d'utilisateur afin de lire au moins un attribut enregistré dans le jeton ID à partir du jeton ID pour la détermination de l'identification d'utilisateur après que l'utilisateur et le système informatique du fournisseur d'ID se soient authentifiés vis-à-vis du jeton ID,
- la transmission de l'au moins un attribut du jeton ID vers le système informatique du fournisseur d'ID par le biais du réseau et par le biais du système informatique d'utilisateur avec un cryptage de bout en bout,
- le stockage de l'information de paiement dans la mémoire électronique avec l'identification d'utilisateur en tant que clé d'accès.

12. Système de traitement de données doté d'un système informatique de fournisseur d'ID et d'au moins un jeton ID (106 d'un utilisateur enregistré (102), où le jeton ID présente
- une zone de mémoire protégée (124) destinée au stockage d'au moins un attribut,
- des moyens (120, 130) destinés à l'authentification de l'utilisateur (102) associé au jeton ID vis-à-vis du jeton ID,
- des moyens (134) destinés à l'authentification du système informatique du fournisseur d'ID vis-à-vis du jeton ID,
- des moyens (132) destinés à l'établissement d'une liaison protégée avec un cryptage de bout en bout vers le système informatique du fournisseur d'ID par lesquels le système informatique du fournisseur d'ID peut lire l'au moins un attribut,
où une condition nécessaire pour la lecture de l'au moins un attribut à partir du jeton ID par le système informatique du fournisseur d'ID est l'authentification réussie de l'utilisateur et du système informatique du fournisseur d'ID vis-à-vis du jeton ID,
et/ou au moins un système informatique de service (150), où le système informatique de service présente une mémoire (180) pour le stockage d'une allocation de la sélection donnée par l'utilisateur et l'ID de la session, où un certificat (144), dans lequel au moins un attribut est spécifié pour lequel le système informatique du fournisseur d'ID a une autorisation de lecture pour un accès en lecture, est stocké par le système informatique du fournisseur d'ID,
où, dans le cas de l'au moins un attribut, il s'agit d'au moins un attribut personnel de l'utilisateur et/ou un pseudonyme de l'utilisateur,
où, un compte prépayé (184) de l'utilisateur est stocké par le système informatique du fournisseur d'ID, où l'information de paiement spécifie un procédé de paiement prépayé et le système informatique de fournisseur d'ID impute le montant de paiement au compte prépayé,
où le système informatique du fournisseur d'ID comprend une banque de données, dans laquelle les données d'enregistrement de l'utilisateur enregistré sont stockées, où, pour chaque utilisateur enregistré, une information de paiement est stockée dans la banque de données à laquelle on peut avoir accès à l'aide d'une identification d'utilisateur de l'utilisateur concerné sous la forme d'une clé d'accès, où, dans le cas de l'identification d'utilisateur, il s'agit au moins du pseudonyme de l'utilisateur.
